# EUROPÄISCHE PATENTSCHRIFT

(11) **EP 1 784 288 B1**
(45) Veröffentlichungstag und Bekanntmachung des Hinweises auf die Patenterteilung: **20.04.2016**
(21) Anmeldenummer: 05757778.5
(22) Anmeldetag: 08.07.2005
(51) Int. Cl.: B25J 11/00, B05B 13/04

(54) **VORRICHTUNG ZUM BESCHICHTEN, INSBESONDERE ZUM LACKIEREN, VON GEGENSTÄNDEN, INSBESONDERE VON FAHRZEUGKAROSSERIEN**
DEVICE FOR COATING, IN PARTICULAR FOR PAINTING OBJECTS, IN PARTICULAR VEHICLE BODIES
DISPOSITIF POUR RECOUVRIR, EN PARTICULIER POUR PEINDRE DES ARTICLES, EN PARTICULIER DES CARROSSERIES DE VEHICULES

(30) Priorität: 19.08.2004 DE 102004040161
(43) Veröffentlichungstag der Anmeldung: 16.05.2007
(73) Patentinhaber: Eisenmann SE, 71032 Böblingen (DE)
(72) Erfinder: ALBRECHT, Markus, 74232 Abstatt (DE)
(74) Vertreter: Ostertag, Ulrich
(86) Internationale Anmeldenummer: PCT/EP2005/007391
(87) Internationale Veröffentlichungsnummer: WO 2006/021265

(56) Entgegenhaltungen:
- DE-C1- 10 035 655
- FR-A- 2 806 012
- US-A- 5 240 745
- US-A- 5 878 952
- PATENT ABSTRACTS OF JAPAN Bd. 1998, Nr. 06, 30. April 1998 (1998-04-30) -& JP 10 044071 A (FANUC LTD), 17. Februar 1998 (1998-02-17)
- PATENT ABSTRACTS OF JAPAN Bd. 1997, Nr. 07, 31. Juli 1997 (1997-07-31) -& JP 09 085651 A (DAIHEN CORP), 31. März 1997 (1997-03-31)

## Beschreibung

Die Erfindung betrifft eine Vorrichtung zum Beschichten von Gegenständen nach dem Oberbegriff des Patentanspruchs 1.

Zum vollautomatischen Lackieren, aber auch sonstigen Beschichten von Gegenständen, wie z. B. Fahrzeugkarosserien, werden mehrachsige Roboter eingesetzt, die eine Applikationseinrichtung für das Beschichtungsmedium, beispielsweise eine Lackspritzpistole führen. Durch ihre Mehrachsigkeit gelingt es, der Kontur des zu beschichtenden Gegenstandes genau zu folgen und dabei bestimmte Kriterien einzuhalten. Zu diesen Kriterien gehört die Wahrung eines bestimmten Abstandes zum zu beschichtenden Gegenstand und die Orientierung des Sprühstrahles, etwa in der Weise, dass dieser immer etwa senkrecht auf die zu beschichtende Oberfläche auftrifft.

In der automatisierten Produktion werden die zu beschichtenden Gegenstände im allgemeinen mit Hilfe einer Fördereinrichtung linear oder intermittierend durch die Beschichtungskabine hindurchgeführt. Sofern die Bewegung des Gegenstandes kontinuierlich erfolgt, ist es erforderlich, dass der Roboter während des Lackiervorganges dieser Bewegung des Gegenstandes folgt. Auch bei während des Beschichtungsvorganges stillstehenden Gegenständen, die verhältnismäßig lang sind, ist es häufig zweckmäßig, wenn der Roboter in der Lage ist, zusätzlich zu seinen normalen, im allgemeinen sechs Achsen insgesamt eine Linearbewegung durchzuführen. Diese Linearbewegungsmöglichkeit wird in Fachkreisen auch "siebte Achse" genannt.

Bei auf dem Markt befindlichen, bekannten Vorrichtungen ähnlich denen der eingangs genannten Art ist das Tragelement, das ganz erhebliche Kräfte und - da der Roboter von der Seite her in die Beschichtungskabine hineinragt - auch Kippmomente aufnehmen muss, von einem Massivprofil gebildet. Dieses ist jedoch außerordentlich schwer, damit teuer und schwierig zu handhaben.

Eine Vorrichtung der eingangs genannten Art ist aus der US 5 240 754 bekant geworden. Dort wird ein eine Applikationseinrichtung tragender Roboter von einem Schlitten getragen, welcher entlang einer komplex aufgebauten Führungsstruktur verfahrbar ist. Die Führungsstruktur ist als hohle Tragstruktur ausgebildet, an deren beiden Seiten Versteifungsrippen angebracht sind.

Eine weitere Vorrichtung der eingangs genannten Art ist der US 5 878 952 zu entnehmen. Sie ähnelt derjenigen der US 5 240 754, weist jedoch als Tragstruktur eine Anzahl von miteinander verschweißten Hohlprofilrohren auf. Versteifungsrippen sind dort nicht vorgesehen.

Weitere Vorrichtungen, bei denen Roboter verfahrbar angeordnet sind, sind der JP 10 044 071 und der JP 09 085 651 zu entnehmen.

Aufgabe der vorliegenden Erfindung ist es, eine Vorrichtung der eingangs genannten Art so auszugestalten, dass sie insgesamt preiswerter und vor Ort einfacher aufzubauen ist.

Diese Aufgabe wird erfindungsgemäß durch eine Vorrichtung mit den im Patentanspruch 1 angegebenen Merkmalen gelöst.

Wie im Stand der Technik an sich bekannt, wird also das früher als Tragelement eingesetzte Vollprofil durch ein Hohlprofil ersetzt, dessen Gewicht verständlicherweise sehr viel geringer als dasjenige des Vollprofiles ist. Um gleichwohl die erforderliche mechanische Stabilität des Tragelementes zu erzielen, ist das Hohlprofil zusätzlich von der Seite her durch Verstärkungsrippen versteift.

Ein solches Hohlprofil ist nicht nur sehr viel kostengünstiger als das massive Tragelement, sondern lässt sich auf der Baustelle auch mit einfacheren Mitteln verbauen, insbesondere dort, wo kein Deckenkran zur Verfügung steht oder der Einbauort von einem Deckenkran nicht erreicht werden kann.

Erindungsgemäß ist das Tragelement von einem Normteil-Hohlprofil mit konstanter Wandstärke gebildet, das an mindestens einer Seite durch eine Mehrzahl von Verstärkungsrippen versteift ist. Durch die Verwendung von Normteil-Hohlprofilen ergeben sich einerseits Kostenvorteile bei der Beschaffung und andererseits sind die mechanischen Eigenschaften solcher Normteile gut definiert, weshalb die Stabilität von so hergestellten Tragelementen mit guter Genauigkeit berechenbar ist, so dass vorsorgliche Überdimensionierung entfallen kann.

Erfindungsgemäß weist die Führungsstruktur außerdem eine auf einer Seitenfläche des Tragelements angeordnete Stützschiene auf, auf der mindestens eine Führungsrolle des Schlittens abrollt. Dadurch kann auf besonders einfache Weise das Kippmoment aufgefangen werden, das vom Applikationsroboter herrührt, ohne dass dadurch nennenswert mehr Material verbaut werden müsste.

Zweckmäßigerweise ist das Hohlprofil an beiden gegenüberliegenden Seitenflächen durch eine Mehrzahl von Verstärkungsrippen versteift.

Besonders bevorzugt ist diejenige Ausgestaltung der Vorrichtung, bei welcher das Hohlprofil aus einer Mehrzahl von nebeneinander angeordneten Segmenten zusammengesetzt ist. Die Länge jedes Segmentes wird dabei so gewählt, dass es aufgrund seiner Abmessungen und seines Gewichts während des Transportes zur Baustelle und während des Einbaus gut handhabbar ist.

Auf der Führungstruktur kann zusätzlich ein Handhabungsroboter verfahrbar sein. Derartige Handhabungsroboter dienen beispielsweise dazu, Türen oder andere bewegliche Teile von Fahrzeugkarosserien beim Lackieren so zu verschwenken, dass alle Oberflächenbereiche vom Lack erreicht werden können.

Vorzugsweise ist die Vorrichtung zum Lackieren von Gegenständen, insbesondere von Fahrzeugkarosserien ausgebildet.

Ein Ausführungsbeispiel der Erfindung wird nachfolgend anhand der Zeichnung näher erläutert; es zeigen
Figur 1 einen Teilschnitt durch eine Lackspritzkabine zum Lackieren von Fahrzeugkarosserien;
Figur 2 eine Ausschnittvergrößerung aus Figur 1.

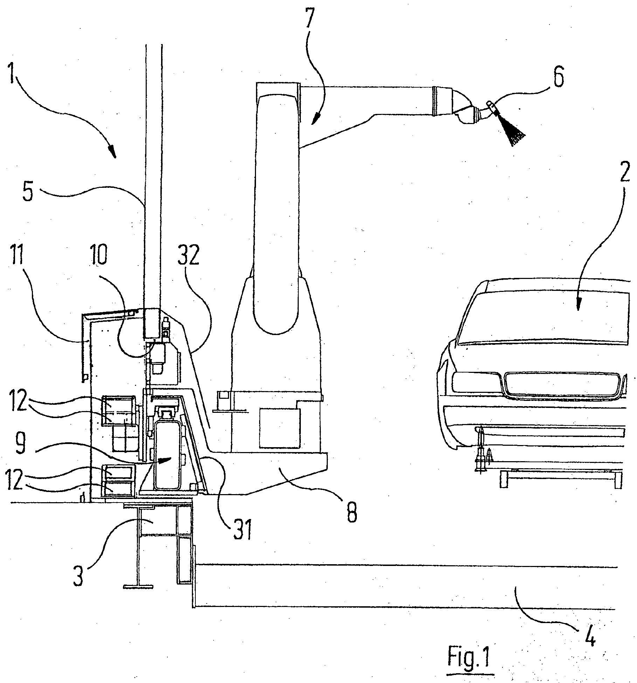

In Figur 1 ist eine Lackspritzkabine, wie sie zum Lakkieren von Fahrzeugkarosserien 2 eingesetzt wird, insgesamt mit dem Bezugszeichen 1 gekennzeichnet. Sie wird von einem Stahlbau getragen, von dem in der Zeichnung ein Horizontalträger 3 erkennbar ist. Die Lackspritzkabine 1 wird nach unten durch eine hier nicht näher interessierende Bodenstruktur 4, zu beiden Seiten hin jeweils durch Seitenwände 5, die transparent sein können, und nach oben durch eine nicht dargestellte, ebenfalls nicht interessierende Deckenstruktur begrenzt. Die Fahrzeugkarosserien 2 werden in Richtung senkrecht zur Zeichenebene der Figur durch ein nicht gezeigtes Fördersystem kontinuierlich oder intermittierend hindurchbewegt, während sie in nachfolgend beschriebener Weise lackiert werden.

Die Lackierung der Fahrzeugkarosserien 2 erfolgt mit Hilfe einer Spritzpistole 6, die von einem sechsachsigen, insgesamt mit dem Bezugszeichen 7 versehenen Roboter geführt wird. Der Roboter 7 seinerseits ist auf einem Schlitten 8 montiert, der entlang einer weiter unten näher erläuterten Führungsstruktur 9 parallel zur Bewegungsrichtung der Fahrzeugkarosserien 2, also entlang der benachbarten Seitenwand 5, verfahrbar ist.

An den unteren Bereich beider Seitenwände 5 ist, mit dem Innenraum der Lackspritzkabine 1 über einen breiten, spaltartigen Zugang 10 verbunden, ein Nebengehäuse 11 angesetzt, in dem verschiedene zur Versorgung und zum Betrieb des Schlittens 8 sowie des Roboters 7 erforderliche Komponenten untergebracht sind. Bei diesen Komponenten handelt es sich insbesondere um nicht eingezeichnete elektrische und pneumatische Steuerungen, Ventile, elektrische Leitungen und Versorgungsleitungen zur Zufuhr von Farbe und Preßluft sowie um Medienführungsketten 12a, 12b. Von diesen Medienführungsketten 12a, 12b sind vier Trums dargestellt. An ihnen sind die verschiedenen elektrischen und medienführenden Verbindungsleitungen gehalten, die in einer Schleife von einem ortsfesten Anschlußpunkt im Bereich des Nebengehäuses 11 zum Schlitten 8 bzw. zu dem daran angebrachten Roboter 7 geführt sind.

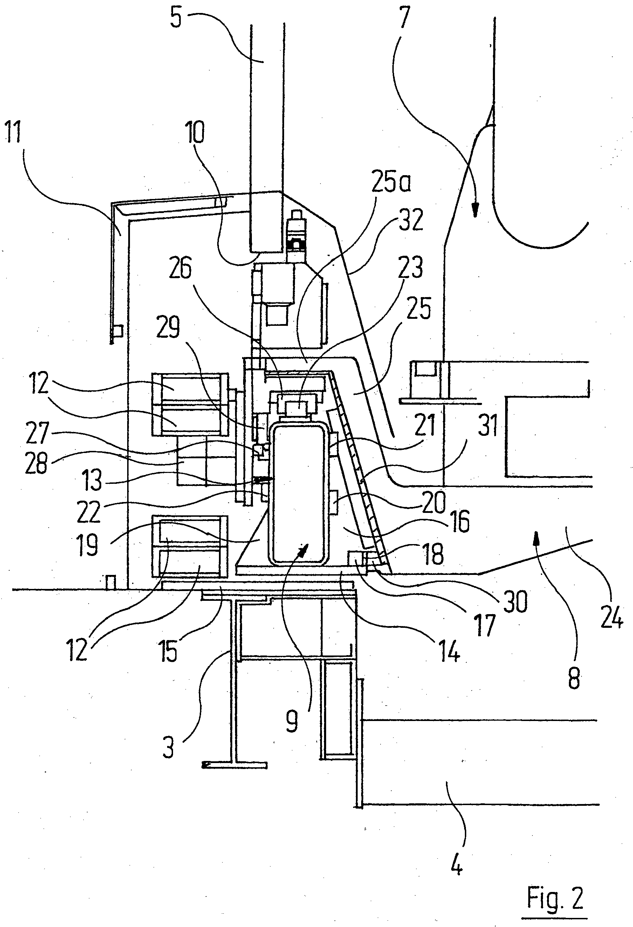

Zur Beschreibung der Führungsstruktur 9, an welcher der Schlitten 8 mit dem Roboter 7 entlangbewegt wird, wird nunmehr auf die Detailvergrößerung der Figur 2 Bezug genommen. Wie dieser zu entnehmen ist, umfasst die Führungsstruktur 9 als hauptsächliche lastaufnehmende Komponente ein Hohlprofil 13, das als Normteil im Handel erhältlich ist. Das Hohlprofil 13 hat im wesentlichen rechteckigen Querschnitt, wobei die längeren Rechteckseiten vertikal stehen. Die untere Schmalseite des Hohlprofils 13 ist auf einer horizontalen Tragplatte 14 befestigt, die ihrerseits in der Höhe und Ausrichtung verstellbar über nicht dargestellte Schrauben mit einer auf dem Stahlbau 3 befestigten Unterplatte 15 verbunden ist.

An der zum Kabineninneren weisenden Seitenfläche des Hohlprofiles 13 sind in regelmäßigen Abständen Versteifungs-Profilrippen 16 angeschweißt, die in der Seitenansicht der Figur 2 etwa die Form eines rechtwinkligen Dreieckes besitzen. Zwischen den Versteifungs-Profil rippen 16 verläuft eine Führungsleiste 17, die auf der Tragplatte 14 befestigt ist und an ihrer ins Innere der Lackspritzkabine 1 zeigenden Seitenfläche eine gehärtete Laufbahn 18 besitzt.

Auch an der von der Innenseite der Lackspritzkabine 1 abgewandten Seitenfläche ist das Hohlprofil 13 in regelmäßigen Abständen mit in der Seitenansicht dreieckigen Versteifungsrippen 19 versehen.

Das Hohlprofil 13 besteht, in Längsrichtung, also senkrecht zur Zeichenebene der Figuren 1 und 2 gesehen, aus einzelnen Segmenten, deren Länge so bemessen ist, daß die einzelnen Segmente gut handhabbar sind. Diese Segmente sind durch Flacheisen 20, 21, die sich über die Gesamtlänge der Führungsstruktur 9 erstrecken und an der inneren Seitenfläche des Hohlprofiles 13 angeschweißt sind, sowie durch ein Flacheisen 22, welches sich ebenfalls über die gesamte Länge der Führungsstruktur 9 erstreckt und an der äußeren Seitenfläche des Hohlprofils 13 angeschweißt ist, zusammengehalten.

Auf der oberen Schmalseite trägt das Hohlprofil 13 eine Profil-Führungsschiene 23, die sich vorzugsweise über alle oder jedenfalls mehrere Segmente des Hohlprofiles 13 hinweg erstreckt.

Der Schlitten 8 umfasst einen ins Kabineninnere ragenden Tisch 24, der so gestaltet ist, daß er unterschiedliche Fabrikate von Robotern 7 tragen kann. Zwei Ausleger 25, die mit dem Tisch verbunden und so geformt sind, daß sie die Führungsstruktur 9 von der Seite und oben her übergreifen, tragen an ihrem oberhalb des Hohlprofiles 13 liegenden, im wesentlichen horizontal verlaufenden Bereich 25a jeweils eine Linearführung 26, die auf der Profil-Führungsschiene 23 reibungsarm verschiebbar ist.

An der nach außen zeigenden Seitenfläche des Hohlprofiles 13 ist eine horizontal verlaufende, schräg verzahnte Zahnstange 27 angebracht; auch diese erstreckt sich vorzugsweise über die gesamte Länge des Hohlprofiles 13 oder doch über mehrere von dessen Segmenten.

Der Schlitten 8 führt einen Antriebmotor mit sich, dessen Getriebe 28 in der Zeichnung erkennbar ist und dessen Ausgangsritzel 29 mit der Zahnstange 27 kämmt.

Im untersten Bereich des Schlittens 8 sind mehrere Führungsrollen 30 um vertikale Achsen drehbar gelagert, die auf der gehärteten Laufbahn 18 der Führungsleiste 17 abrollen können.

Die gesamte Führungsstruktur 9 ist an ihrer nach innen und nach oben weisenden Seite durch ein Abdeckblech 31 geschützt, welches gleichzeitig das Eindringen von Verunreinigungen wie Farbnebel in das Innere des Nebengehäuses 11 verhindert. Ein weiteres Abdeckblech 32 ist mit seinem oberen Rand an der Innenseite der Kabinenwand 5 oberhalb des spaltartigen Zugangs 10 befestigt und erstreckt sich so weit nach unten, daß es das untere Abdeckblech 31 seitlich überlappt. Um zu verhindern, daß durch den Spalt zwischen den beiden Abdeckblechen 31, 32 Schmutz in das Nebengehäuse 11 eindringen kann, wird der Innenraum des Nebengehäuses 11 auf einem höheren Druck als der Innenraum deer Lackspritzkabine 1 gehalten.

Im Betrieb der oben beschriebenen Lackspritzkabine 1 werden die Fahrzeugkarosserien 2, wie schon beschrieben, intermittierend oder kontinuierlich senkrecht zur Zeichenebene der Figuren 1 und 2, beispielsweise nach oben, bewegt. Während dieser Bewegung oder im Stillstand werden die Fahrzeugkarosserie 2 mit Hilfe der Lackspritzpistole 6 beschichtet, die unter Ausnutzung der sieben Achsen des Roboters 7 so bewegt wird, daß alle zu lackierenden Bereiche der Fahrzeugkarosserie 2 erreicht werden, wobei der günstigste Abstand zwischen Spritzpistole 6 und Fahrzeugkarosserie 2 sowie die jeweils günstigste Orientierung des Farbnebels eingestellt werden. Dabei kann der Roboter 7 entlang seiner durch die Führungsstruktur 9 vorgegebenen "siebten Achse" verfahren werden, entweder, um bei stillstehender Fahrzeugkarosserie 2 an dieser in horizontaler Richtung entlang zu lackieren, oder um die sich bewegende Fahrzeugkarosserie 2 zu verfolgen.

## Patentansprüche

1. Vorrichtung zum Beschichten von Gegenständen (2) mit
a) einem mehrachsigen, eine Applikationseinrichtung (6) tragenden Roboter (7);
b) einem den Roboter (7) tragenden, linear verfahrbaren Schlitten (8);
c) einer Führungsstruktur (9), entlang welcher der Schlitten (9) verfahrbar ist und die aufweist:
ca) ein die Kräfte aufnehmendes, sich über den Verfahrweg des Roboters (7) erstreckendes Tragelement (13);
cb) eine auf der Oberseite des Tragelements (13) angeordnete Führungsschiene (23), die mit einer komplementären Linearführung (26) des Schlittens (8) zusammenwirkt;
**dadurch gekennzeichnet, dass**
d) das Tragelement (13) von einem Normteil-Hohlprofil mit konstanter Wandstärke gebildet ist, das an mindestens einer Seite durch eine Mehrzahl von Verstärkungsrippen (16, 19) versteift ist;
e) die Führungsstruktur außerdem eine auf einer Seitenfläche des Tragelements (13) angeordnete Stützschiene (17) aufweist, auf der mindestens eine Führungsrolle (30) des Schlittens (8) abrollt.

2. Vorrichtung nach Anspruch 1, **dadurch gekennzeichnet,**
**dass** das Normteil-Hohlprofil (13) an beiden gegenüberliegenden Seitenflächen durch eine Mehrzahl von Verstärkungsrippen (16, 19) versteift ist.

3. Vorrichtung nach Anspruch 1 oder 2, **dadurch gekennzeichnet, dass** das Normteil-Hohlprofil (13) aus einer Mehrzahl von nebeneinander angeordneten Segmenten zusammengesetzt ist.

4. Vorrichtung nach einem der vorhergehenden Ansprüche, **dadurch gekennzeichnet, dass** auf der Führungsstruktur (9) zusätzlich ein Handhabungroboter verfahrbar ist.

5. Vorrichtung nach einem der vorhergehenden Ansprüche,
**dadurch gekennzeichnet, dass** die Vorrichtung zum Lackieren von Gegenständen (2) ausgebildet ist.

6. Vorrichtung nach einem der vorhergehenden Ansprüche,
**dadurch gekennzeichnet, dass** die Gegenstände (2) Fahrzeugkarosserien sind.

## Claims

1. Device for coating objects (2), comprising:
a) a multi-axis robot (7) which supports an application device (6);
b) a slide (8) which supports the robot (7) and is displaceable in a linear manner;
c) a guide structure (9) along which the slide (8) is displaceable and which comprises:
ca) a support element (13) which absorbs the forces concerned and extends over the displacement travel of the robot (7);
cb) a guide rail (23) arranged on the upper side of the support element (13) and cooperating with a complementary linear guide (26) of the slide (8),
**characterised in that**
d) the support element (13) is formed by a standard part hollow profile having an unchanging wall thickness and which is stiffened on at least one side by a plurality of reinforcing ribs (16, 19) ;
e) the guide structure further comprises a support rail (17) arranged on a side face of the support element (13), on which support rail at least one guide roller (30) of the slide (8) runs.

2. Device according to claim 1, **characterised in that** the standard part hollow profile (13) is stiffened on both opposed lateral faces by a plurality of reinforcing ribs (16, 19).

3. Device according to claim 1 or 2, **characterised in that** the standard part hollow profile (13) is composed from a plurality of segments arranged end-to-end.

4. Device according to any one of the preceding claims, **characterised in that** a handling robot is additionally displaceable on the guide structure (9).

5. Device according to any one of the preceding claims, **characterised in that** the device is configured to paint objects (2).

6. Device according to any one of the preceding claims, **characterised in that** the objects (2) are vehicle bodies.

## Revendications

1. Dispositif de revêtement d'objets (2) comprenant
a) un robot (7) multiaxes portant un système d'application (6) ;
b) un chariot (8) pouvant se déplacer linéairement, portant le robot (7) ;
c) une structure de guidage (9) le long de laquelle le chariot (8) peut se déplacer et qui présente :
ca) un élément de support (13) absorbant les forces, qui s'étend sur le chemin de déplacement du robot (7) ;
cb) un rail de guidage (23) disposé sur la face supérieure de l'élément de support (13), qui coopère avec un guidage linéaire (26) complémentaire du chariot (8) ;
**caractérisé en ce que**
d) l'élément de support (13) est formé par un profilé creux normalisé ayant une épaisseur de paroi constante, qui est rigidifié par une pluralité de nervures de renfort (16, 19) sur au moins un côté ;
e) la structure de guidage présente en outre un rail de support (17) disposé sur une surface latérale de l'élément de support (13), sur lequel roule au moins un galet de guidage (30) du chariot (8).

2. Dispositif selon la revendication 1, **caractérisé en ce que** le profilé creux normalisé (13) est rigidifié par une pluralité de nervures de renfort (16, 19) sur les deux surfaces latérales opposées.

3. Dispositif selon la revendication 1 ou la revendication 2, **caractérisé en ce que** le profilé creux normalisé (13) est composé d'une pluralité de segments juxtaposés.

4. Dispositif selon l'une des revendications précédentes, **caractérisé en ce qu'**un robot de manipulation peut de plus se déplacer sur la structure de guidage (9).

5. Dispositif selon l'une des revendications précédentes, **caractérisé en ce que** le dispositif est conçu pour la peinture d'objets (2).

6. Dispositif selon l'une des revendications précédentes, **caractérisé en ce que** les objets (2) sont des carrosseries de véhicules.
